**Europäisches Patentamt**

**European Patent Office**

**Office européen des brevets**

(19)

(11) Veröffentlichungsnummer : **0 568 712 B1**

(12) # EUROPÄISCHE PATENTSCHRIFT

(45) Veröffentlichungstag der Patentschrift :
**02.08.95 Patentblatt 95/31**

(51) Int. Cl.$^6$ : **G05B 5/01**, G05D 13/62

(21) Anmeldenummer : **92107499.3**

(22) Anmeldetag : **04.05.92**

(54) **Einrichtung zur Drehzahlregelung bei einer elektrischen Maschine, wobei Mittel zur Momentenbegrenzung vorgesehen sind.**

(43) Veröffentlichungstag der Anmeldung :
**10.11.93 Patentblatt 93/45**

(45) Bekanntmachung des Hinweises auf die Patenterteilung :
**02.08.95 Patentblatt 95/31**

(84) Benannte Vertragsstaaten :
**AT DE FR GB IT SE**

(56) Entgegenhaltungen :
**US-A- 4 427 934**

(73) Patentinhaber : **SIEMENS AKTIENGESELLSCHAFT**
**Wittelsbacherplatz 2**
**D-80333 München (DE)**

(72) Erfinder : **Künzel, Stefan, Dipl.-Ing. (uni)**
**Am Europakanal 14**
**W-8520 Erlangen (DE)**
Erfinder : **Tröndle, Hans-Peter, Dr.-Ing.**
**Südhang 14**
**W-8550 Forchheim (DE)**

## Beschreibung

Wenn eine elektrische Maschine hochdynamisch auf eine Geschwindigkeit zu regeln ist, wird es erforderlich, eine Momentenbegrenzung vorzusehen, die ein Überlasten der Maschine verhindert. Es zeigt sich jedoch, daß eine Maschine mit einer ziehenden Last eine gegenüber einer unbelasteten Maschine wesentlich schnellere Drehzahlerhöhung verkraftet. Für den umgekehrten Fall, daß eine Maschine mit einer stark bremsenden Last beaufschlagt wird, gilt das Gegenteil.

Aufgabe der Erfindung ist es, eine Einrichtung der eingangs genannten Art so auszubilden, daß eine hochdynamische Regelung der Drehzahl einer elektrischen Maschine möglich ist, ohne daß die Maschine hinsichtlich ihrer elektrischen Belastung überfordert wird, und wobei ferner ein überschwingungsfreies Regeln auf die gewünschte Drehzahl ermöglicht wird.

Gemäß der Erfindung wird die Aufgabe dadurch gelöst, daß die Solldrehzahl einem ersten Vergleicher zugeleitet wird, dem ferner eine Vorsteuerdrehzahl zugeführt wird, daß das Ausgangssignal dieses Vergleichers an den Eingang eines Begrenzers gelangt, welcher der jeweiligen Differenzdrehzahl jeweils ein Vorsteuermoment zuordnet, welches ausgehend von einer Grundstellung hinsichtlich der Begrenzung einstellbar ist, daß das Vorsteuermoment einem Integrator zugeleitet wird, der unter Berücksichtigung einer vorgegebenen Systemträgheit die Vorsteuerdrehzahl ermittelt, daß diese nach einer dem Maschinenverhalten angepaßten Glättung als interne Solldrehzahl einem weiteren Vergleicher aufgeschaltet wird, dem als weitere Eingangsgröße die tatsächliche Drehzahl der Maschine mitgeteilt wird, daß das Ausgangssignal des weiteren Vergleichers einem Regler mit integralem Verhalten zugeführt wird, dessen Ausgangssignal als Eingangssignal für die durch ein Lastmoment belastbare Maschine dient und daß die Verstellung der Grenzwerte des Begrenzers durch den integralen Anteil des Reglers erfolgt.

Dadurch, daß dem Ausgangssignal des Reglers das Ausgangssignal des Begrenzers additiv hinzugefügt wird, wird der Regler weitgehend entlastet. Dadurch kann die Regelung robust ausgeführt werden und behält gleichwohl ein hochdynamisches Führungsverhalten.

In diesem Zusammenhang erweist es sich auch als vorteilhaft, daß dieses Hinzufügen über eine Glättung erfolgt und daß durch die Vorsteuerdrehzahl über ein Modell die interne Solldrehzahl generiert wird, wobei dieses Modell die Dynamik der Momentenerzeugung sowie alle zusätzlichen Totzeiten und Glättungseffekte berücksichtigt, damit sprunghafte Vorgänge vermieden werden.

Dadurch, daß unmittelbar vor die Strecke noch eine feste Momentenbegrenzung geschaltet ist, ist ein weiterer Maschinenschutz gegeben.

Für die Anwendung der Einrichtung bei feldorientierten Regelungen erweist es sich als vorteilhaft, daß die interne Solldrehzahl zur Feldvorsteuerung der Maschine verwendbar ist und zwar nach Frequenz und Amplitude.

Ein Ausführungsbeispiel der Erfindung ist in der Zeichnung dargestellt und wird im folgenden näher erläutert.

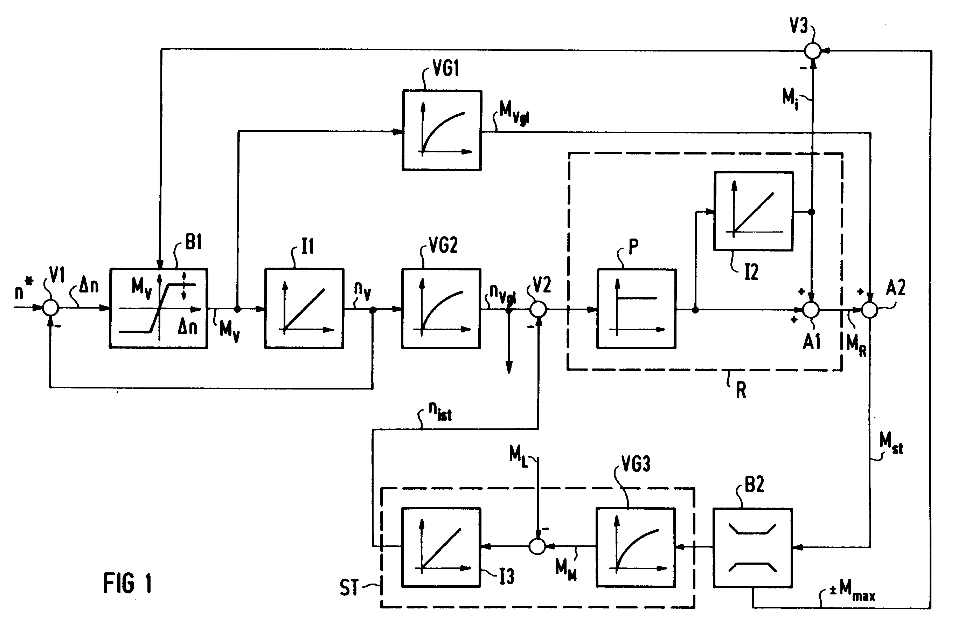

In Form eines Blockschaltbildes wird in FIG 1 gezeigt, wie eine Solldrehzahl n* an einen ersten Vergleicher V1 gelangt, dem ferner eine Vorsteuerdrehzahl $n_V$ subtraktiv zugeführt wird, wobei auf das Generieren dieser Vorsteuerdrehzahl $n_V$ im folgenden noch eingegangen wird.

Das Ausgangssignal des ersten Vergleichers V1 gelangt als Differenzdrehzahl delta n an den Eingang eines ersten Begrenzers B1. Dieser Begrenzer B1 ordnet jeder Differenzdrehzahl delta n jeweils ein Vorsteuermoment $M_V$ zu, und zwar so, daß für positive und negative Werte ab einem vorgegebenen Wert für die Differenzdrehzahl delta n eine Begrenzung des Vorsteuermoments $M_V$ erfolgt. Dieser Sachverhalt ist im Blockschaltbild für den ersten Begrenzer B1 in Form einer Kennlinie angedeutet. Zunächst sei die Kennlinie in der dargestellten Form als symmetrisch angenommen, jedoch kann die Kennlinie wie durch gestrichelte Pfeile angedeutet, hinsichtlich ihrer Begrenzungszweige in positive bzw. negative Ordinatenrichtung verschoben werden, wie dies im folgenden noch erläutert wird.

Das Ausgangssignal des ersten Begrenzers B1, d.h. das Steuermoment $M_V$, gelangt an den Eingang eines ersten Integrators I1, der abhängig vom Trägheitsmoment der Maschine die Vorsteuerdrehzahl $n_V$ generiert, die dann nicht nur an den subtrahierenden Eingang des Vergleichers V1, sondern auch an ein zweites Verzögerungsglied VG2 gelangt. Dieses zweite Verzögerungsglied VG2 ist hinsichtlich seiner Zeitkonstante an das Strom-Moment-Verhalten der zu steuernden elektrischen Maschine angepaßt, die zusammen mit ihrer Last als Strecke ST gestrichelt angedeutet ist. In der tatsächlichen Ausführung besteht VG aus einem ganzen Konglomerat von Verzögerungen, Totzeiten und Mittelwertbildnern entsprechend den bei der Reglerbearbeitung, Momentenerzeugung und Drehzahlmessung auftretenden parasitären Verzögerungen, Rechentotzeiten usw.

Wird zur Schonung der Machanik im Vorsteuerzweig noch eine Glättung VG1 eingeführt (z.B. PT1, Mittelwertbildner usw.), so muß deren dynamischen Verhalten ebenfalls in VG2 eingebracht werden.

Hinter der zweiten Verzögerung, im Ausführungsbeispiel dem Verzögerungsglied VG2, kann nun eine geglättete Vorsteuerdrehzahl $n_{Vg1}$, wie durch einen Pfeil angedeutet, an der Übersichtlichkeit halber nicht gezeigte, feldorientierungsrelevante Baugruppen gelangen, zum anderen speist die geglättete Vorsteuerzahl $n_{Vg1}$ als sozusagen interne Solldrehzahl den ersten Eingang eines Vergleichers V2, dem über einen subtrahierernden Eingang die Istdrehzahl $n_{ist}$ der Maschine zugeleitet wird.

Das Ausgangssignal des zweiten Vergleichers V2 gelangt an einen gestrichelt dargestellten Regler R, der aus einem Proportionalglied P und einem Integrator I2 aufgebaut ist. Die Ausgangssignale dieser beiden Elemente gelangen an einen Addierer A1, an dessen Ausgang dann das Reglermoment $M_R$ vorliegt. Dieses Reglermoment $M_R$ könnte zwar prinzipiell bereits zum Steuern der Maschine verwendet werden, jedoch erweist es sich als günstig, daß das Vorsteuermoment $M_V$, bei Bedarf geglättet über ein Verzögerungsglied VG1, als dann geglättetes Vorsteuermoment $M_{Vg1}$ ebenfalls dem Addierer A2 zugeleitet wird, so daß der Regler R entlastet wird. Das Ausgangssignal des zweiten Addierers A2 gelangt dann als stellendes Moment $M_{st}$ an die Strecke ST, d.h. die drehzahlregelbare Maschine. Dazu kann das stellende Moment $M_{st}$ noch über einen zweiten Begrenzer B2 geleitet werden, der sowohl in positiver als auch in negativer Richtung das Überschreiten eines maximalen Momentes $\pm M_{max}$, bzw. $M_{max}$ und $M_{min}$, verhindert. Das Ausgangssignal des zweiten Begrenzers B2 gelangt dann an die eigentliche Strecke ST, d.h. an das System Maschine-Last. Angedeutet ist das Verhalten der Strecke ST durch ein Verzögerungsglied VG3, an dessen Ausgang das eigentliche mechanische Moment $M_M$ vorliegt, welches dann durch das Lastmoment $M_L$ reduziert wird. Bei einer Differenz zwischen diesen Momenten $M_M$ und $M_L$ ergibt sich über einen dritten Integrator I3 (die mechanische Drehmasse) die Istdrehzahl $n_{ist}$, die, wie eingangs geschildert, dem zweiten Vergleicher V2 zugeleitet wird.

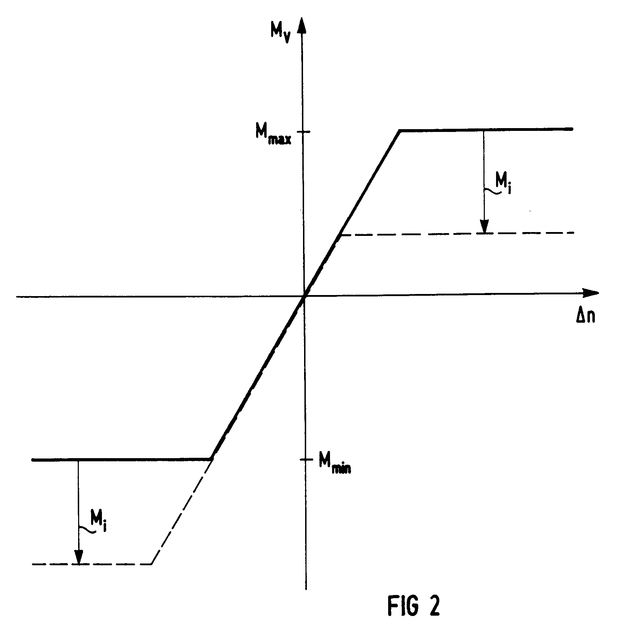

Ganz wesentlich für die Erfindung ist nun, daß die Maximalwerte für die Maschine, die beispielsweise am zweiten Begrenzer B2 anstehen, auch an einen dritten Vergleicher V3 gelangen, der eben diese Maximalwerte $+/-M_{max}$ um den integralen Anteil des Reglerausgangssignals verschiebt. Bei einem integralen Anteil $M_i$ ergäben sich am Ausgang des Vergleichers also die Werte $M_{max} - M_i$ und $M_{min}$, $-M_i$. Dies ist in FIG 2 gezeigt. Die solchermaßen variierten Kennlinie (gestrichelt angedeutet) des ersten Begrenzers B1 bewirkt damit eine Anpassung an die jeweils verfügbare Stellreserve.

Typisch an der Erfindung ist die Anpassung der Vorsteuermomente an die mechanische Last $M_L$. In der gezeigten Struktur (FIG 1) ist stationär die Last $M_L$ immer am Ausgang des Integrators zu finden. Es gilt:

$$\overline{M}_i = \overline{M}_L$$

Werden wie bei der Zustandrückführung - z.B. durch Rückführen des Torsionsmoments - Signale mit konstantem Anteil z.B. am Reglerausgang aufgeschaltet, so muß das stationäre Lastmoment $\overline{M}_L$ aus dem Integralanteil $M_i$ und sämtlichen Rückführungen berechnet werden. Entsprechendes gilt, wenn der PI-Regler anders strukturiert ist als in FIG 1.

Wesentlich ist, daß $\overline{M}_L$ aus den Größen des Reglers oder auch aus einem Beobachter ermittelt wird und mit dem daraus gewonnenen Signal die Begrenzungskennlinie der Vorsteuerung B1 adaptiert wird.

**Patentansprüche**

1. Einrichtung zur Drehzahlregelung bei einer elektrischen Maschine, wobei Mittel zu Momentenbegrenzung vorgesehen sind, **dadurch gekennzeichnet**, daß die Solldrehzahl ($n^*$) einem ersten Vergleicher (V1) zugeleitet wird, dem ferner eine Vorsteuerdrehzahl ($n_V$) zugeführt wird, daß das Ausgangssignal dieses Vergleichers (delta n) an den Eingang eines Begrenzers (B1) gelangt, welcher der jeweiligen Differenzdrehzahl (delta n) jeweils ein Vorsteuermoment ($M_V$) zuordnet, welches ausgehend von einer Grundstellung hinsichtlich der Begrenzung einstellbar ist, daß das Vorsteuermoment ($M_V$) einem Integrator (I1) zugeleitet wird, der unter Berücksichtigung einer vorgegebenen Systemträgheit die Vorsteuerdrehzahl ($n_V$) ermittelt, daß diese nach einer dem Maschinenverhalten angepaßten Glättung als interne Solldrehzahl ($n_{Vg1}$) einem weiteren Vergleicher (V2) aufgeschaltet wird, dem als weitere Eingangsgröße die tatsächliche Drehzahl ($n_{ist}$) der Maschine mitgeteilt wird, daß das Ausgangssignal des weiteren Vergleichers (V2) einem Regler (R) mit integralem Verhalten zugeführt wird, dessen Ausgangssignal ($M_{st}$) als Eingangssignal für die durch ein Lastmoment ($M_L$) belastbare Maschine dient und daß die Verstellung der Grenzwerte des Begrenzers (B1) durch den integralen Anteil ($M_i$) des Reglers (R) erfolgt.

2. Einrichtung nach Anspruch 1, **dadurch gekennzeichnet**, daß dem Ausgangssignal ($M_R$) des Reglers (R) das Ausgangssignal des Begrenzers ($M_V$) additiv hinzugefügt wird.

3. Einrichtung nach Anspruch 2, **dadurch gekennzeichnet,** daß dieses Hinzuführen über eine Glättung (VG1) erfolgt und daß durch die Vorsteuerdrehzahl ($n_v$) über ein Modell (VG2) die interne Solldrehzahl ($n_{Vg1}$) generiert wird, wobei dieses Modell (VG2) die Dynamik der Momentenerzeugung sowie alle zusätzlichen Totzeiten und Glättungseffekte berücksichtigt.

4. Einrichtung nach Anspruch 1, 2 oder 3, **dadurch gekennzeichnet,** daß unmittelbar vor die Strecke (ST) noch eine feste Momentenbegrenzung geschaltet ist.

5. Einrichtung nach einem der vorstehenden Ansprüche, **dadurch gekennzeichnet**, daß die interne Solldrehzahl ($n_{Vg1}$) zur Feldvorsteuerung der Maschine verwendbar ist.

## Claims

1. Device for speed control in an electric machine, with means being provided for torque limitation, characterized in that the desired speed (n*) is supplied to a first comparator (V1), to which there is supplied, moreover, a precontrol speed ($n_V$), in that the output signal of this comparator (delta n) arrives at the input of a limiter (B1), which allocates in each case a precontrol torque ($M_V$) to the respective differential speed (delta n), which torque, proceeding from an initial state, can be adjusted with respect to the limitation, in that the precontrol torque ($M_V$) is supplied to an integrator (I1) which determines the precontrol speed ($n_V$) with consideration of a specified system inertia, in that after a smoothing adapted to the machine performance this precontrol speed is applied as internal desired speed ($n_{Vg1}$) to a further comparator (V2), to which there is communicated as further input variable the actual speed ($n_{actual}$) of the machine, in that the output signal of the further comparator (V2) is supplied to a controller (R) with integral performance, the output signal ($M_{st}$) of which serves as input signal for the machine which can be loaded by a load torque ($M_L$) and in that the adjustment of the limiting values of the limiter (B1) takes place by way of the integral content ($M_I$) of the controller (R).

2. Device according to claim 1, characterized in that the output signal of the limiter ($M_V$) is added additively to the output signal ($M_R$) of the controller (R).

3. Device according to claim 2, characterized in that this addition takes place by way of a smoothing (VG1) and in that by way of the precontrol speed ($n_v$) by way of a model (VG2) the internal desired speed ($n_{Vg1}$) is generated, whereby this model (VG2) considers the dynamics of the torque generation and all additional dead times and smoothing effects.

4. Device according to claim 1, 2 or 3, characterized in that directly before the path (ST) further fixed torque-limiting means are connected.

5. Device according to one of the above claims, characterized in that the internal desired speed ($n_{Vg1}$) can be used for the field precontrol of the machine.

## Revendications

1. Dispositif de régulation de la vitesse de rotation dans une machine électrique, des moyens de limitation du couple étant prévus, caractérisé en ce que la vitesse (n*) de rotation de consigne est envoyée à un premier comparateur (V1), auquel une vitesse ($n_V$) de rotation pilote est envoyée en outre, le signal de sortie de ce comparateur (delta n) arrive à l'entrée d'un limiteur (B1), qui associe à chaque vitesse (delta n) de rotation de différence un couple ($M_V$) pilote, qui peut être réglé à partir d'une position de base de la limitation, le couple ($M_V$) pilote est envoyé à un intégrateur (I1), qui détermine, en tenant compte d'une inertie prescrite du système, la vitesse ($n_V$) de rotation pilote, cette vitesse est envoyée à un autre comparateur (V2) en tant que vitesse ($n_{Vg1}$) interne de rotation de consigne après un filtrage adapté au comportement de la machine, la vitesse ($n_{Ist}$) réelle de rotation de la machine étant communiquée à ce comparateur comme autre grandeur d'entrée, le signal de sortie de l'autre comparateur (V2) est envoyé à un régulateur (R) à action intégrale, dont le signal ($M_{st}$) de sortie sert de signal d'entrée pour la machine pouvant être soumise à un couple ($M_L$) résistant et le réglage des valeurs limites du limiteur (B1) s'effectue par la composante ($M_I$) intégrale du régulateur (R).

2. Dispositif suivant la revendication 1, caractérisé en ce que le signal de sortie du limiteur ($M_V$) est additionné au signal ($M_R$) de sortie du régulateur (R).

3. Dispositif suivant la revendication 2, caractérisé en ce que cette addition s'effectue par l'intermédiaire d'un filtrage (VG1) et la vitesse ($n_{Vg1}$) interne de rotation de consigne est générée par la vitesse ($n_V$) de rotation pilote par l'intermédiaire d'un modèle (VG2), ce modèle (VG2) tenant compte de la dynamique de la production de couple ainsi que de tous les temps morts supplémentaires et effets de filtrage.

4. Dispositif suivant la revendication 1, 2 ou 3, caractérisé en ce qu'une limitation fixe de couple est encore branchée directement en amont de la voie (ST).

5. Dispositif suivant l'une des revendications précédentes, caractérisé en ce que la vitesse ($n_{Vg1}$) interne de rotation de consigne peut être utilisée pour piloter le champ de la machine.

FIG 1

EP 0 568 712 B1

FIG 2